# EUROPEAN PATENT APPLICATION

(11) **EP 1 491 736 A1**
(43) Date of publication of application: **29.12.2004**
(21) Application number: 03745439.4
(22) Date of filing: 28.03.2003
(51) Int. Cl.: F01N 3/20

(54) **NOx PURGING SYSTEM AND METHOD OF REACTIVATING DETERIORATED CATALYST THEREIN**

(30) Priority: 29.03.2002 JP 2002093879
(71) Applicant: ISUZU MOTORS LIMITED, Shinagawa-ku, Tokyo 140-0013 (JP)
(72) Inventor: NAKATSUJI, T., Valtion Teknillinen Tutkimuskeskus, FIN-02044 VTT Espoo (FI); YOKOYAMA, J., Isuzu Advanced Engineering Ctr, Ltd., Fujisawa-shi, Kanagawa 252-8501 (JP); NAKADA, T., Isuzu Advanced Engineering Ctr, Ltd., Fujisawa-shi, Kanagawa 252-8501 (JP); UEKUSA, T., Isuzu Advanced Engineering Ctr, Ltd., Fujisawa-shi, Kanagawa 252-8501 (JP); UEMATSU, Y., Isuzu Advanced Engineering Ctr., Ltd., Fujisawa-shi, Kanagawa 252-8501 (JP); FUJITA, T., Isuzu Advanced Engineering Ctr, Ltd., Fujisawa-shi, Kanagawa 252-8501 (JP); TANAKA, Yousuke c/o Isuzu,Advanced Engineering Cen, Fujisawa-shi, Kanagawa 252-8501 (JP); ENOKI, K., Isuzu Advanced Engineering Ctr., Ltd., Fujisawa-shi, Kanagawa 252-8501 (JP); SHIBUYA, H., Isuzu Advanced Engineering Ctr, Ltd., Fujisawa-shi, Kanagawa 252-8501 (JP)
(86) International application number: PCT/JP2003/003937
(87) International publication number: WO 2003/083273

(57) **Abstract**

A NOx purging system using a direct reduction type NOx catalyst, wherein sulfur is purged while avoiding the occurrence of secondary sulfur poisoning, taking advantage of capability of recovery from deterioration caused by sulfur poisoning at exhaust gas temperature exhibited at normal operating zone, so that the influence of sulfur poisoning can be eliminated and NOx is efficiently purged; and a method of reactivating deteriorated catalyst therein. In particular, a NOx purging system (10) comprising exhaust gas passage (2) and, arranged therein, direct reduction type NOx catalyst (3), which NOx purging system (10) is fitted with first sulfur purge control means (222) for performing such first sulfur purge operation that when exhaust gas temperature (Tg) becomes higher than given set temperature (T1) during normal operation, not only is the oxygen concentration of exhaust gas decreased but also the exhaust temperature (Tg) is raised to not below sulfur purge temperature (Tr).

## Description

### TECHNICAL FIELD

The present invention relates to an exhaust gas NOx purging system of reducing and purging NOx (nitrogen oxides) in the exhaust gas of an internal combustion engine and a method of reactivating a deteriorated catalyst therein. Particularly, it relates to a means and method for reactivating a direct reduction type NOx catalyst used for the NOx purging system from the deteriorated state due to sulfur poisoning.

### BACKGROUND ART

Various studies and proposals have been offered regarding a catalyst-type exhaust gas purifying system for eliminating NOx from the exhaust gas of an internal combustion engine of a vehicle or a stationary internal combustion engine by reducing NOx. Particularly, a NOx reduction catalyst or a three-way-catalyst is in use to purify the exhaust gas of vehicles.

One of the studies and proposals shows an exhaust gas purifying system for internal combustion engine disclosed in the official gazette of the Japanese Patent Laid-Open No. 2000-274279 and the like. in this system, a NOx occlusion reduction catalyst is arranged in an exhaust gas passage of an engine. This system performs the absorbing operation of making the NOx occlusion reduction catalyst absorb NOx during the air/fuel ratio of an incoming exhaust gas is lean. When the NOx absorbing capability almost levels off, the regenerating operation is performed to make the air/fuel ratio of the exhaust gas close to a theoretical air/fuel ratio or rich and to make an oxygen concentration of the incoming exhaust gas low, and thereby releasing the absorbed NOx, and reducing the released NOx by a laid-in precious metal catalyst.

The NOx occlusion reduction catalyst supports a precious metal catalyst such as platinum (Pt) and alkaline earth such as barium (Ba) on a catalyst support. NO in the exhaust gas is oxidized by a catalyst activity of platinum and changed to NO₂ under a high-oxygen-concentration atmosphere. NO₂ is diffused in the catalyst in the form of NO₃⁻, and absorbed in the form of nitrate.

Moreover, when the air/fuel ratio becomes rich and the oxygen concentration lowers, NO₃⁻ is released in the form of NO₂. And the NO₂ is reduced to N₂ in accordance with the catalyst activity of platinum by the reducer such as unburned HC, CO, and H₂ contained in the exhaust gas. It is possible to prevent NOx from being released to the atmospheric air in accordance with the above reducing effect.

However, in the case of the exhaust gas purifying system using the NOx occlusion reduction catalyst, an extremely large quantity of NOx is released in a short time when the NOx occlusion reduction catalyst is regenerated. Therefore, it is necessary to reduce the NOx by a precious metal catalyst. However, even if supplying a proper quantity of reducers, it is difficult to reduce the whole of NOx to N₂ by securely bringing the whole of NOx into contact with the reducers and the precious metal catalyst. Then some of NOx leaks. Therefore, there is a problem that a decrease of NOx is limited.

Moreover, because a catalyst function is deteriorated by the sulfur contained in the fuel of a diesel engine, there is a problem of sulfur poisoning that it is difficult to keep a rate of NOx purge high for a long time. Therefore, the exhaust gas purifying system in the official gazette of the Japanese Patent Laid-Open No. 2000-274279 performs the deterioration judgment that a NOx occlusion reduction catalyst is deteriorated when the NOx concentration at the end of release of NOx is equal to or higher than a predetermined reference value for the deterioration in accordance with the characteristic of an occlusion catalyst which is based on the storage and the release of a large quantity of NOx by absorbing substance.

For the sulfur purge to reactivate the catalyst from the deteriorated state due to the sulfur poisoning, it is necessary to raise the temperature of the catalyst up to 650°C. In the case of a diesel engine, it is necessary to raise the exhaust gas temperature to 600°C or higher in order to raise the catalyst temperature to 650°C or higher. However, even if performing the exhaust gas temperature raising control such as intake throttling or rich burning, it is actually difficult to raise the catalyst temperature up to 650°C by only controlling the engine.

However, separately from the NOx occlusion reduction catalyst, a catalyst for directly reducing NOx (hereafter referred to as direct reduction type NOx catalyst) is disclosed in the patent applications to Republic of Finland No. 19992481 and 20000617.

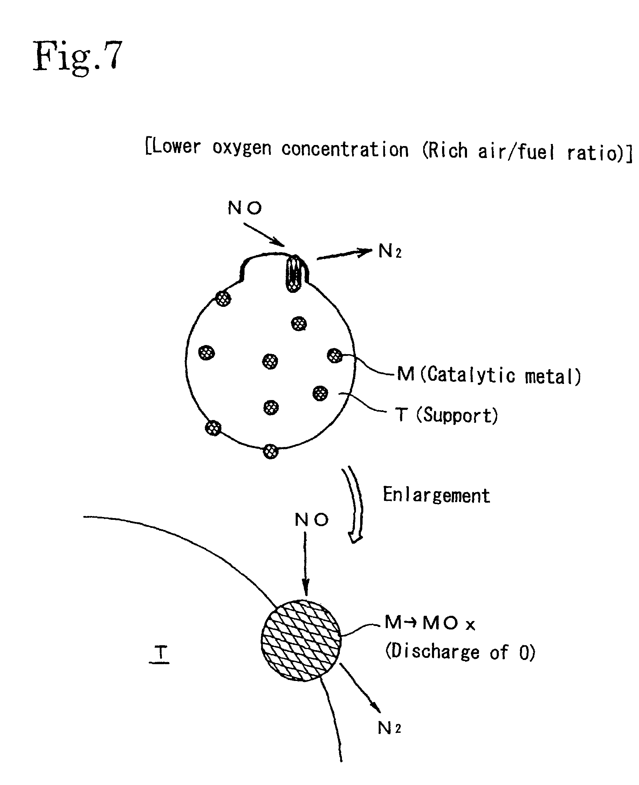

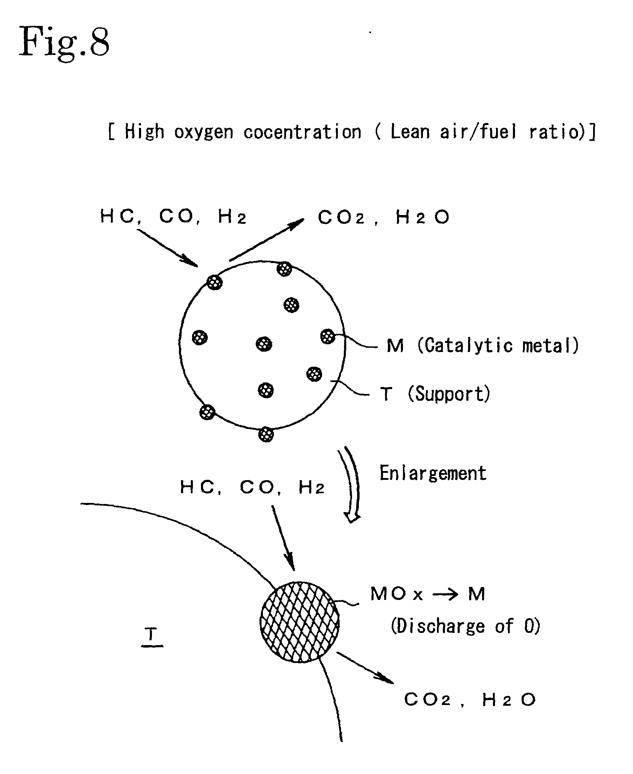

The direct reduction type NOx catalyst is obtained by making a catalyst support T such as âtype zeolite support a metal M such as rhodium (Rh) or palladium (Pd) which is a catalyst component as shown in FIGs. 7 and 8. As shown in FIG 7, in the case of a high oxygen concentration atmosphere such as the lean state exhaust gas of an internal combustion engine such as a diesel engine in which the air/fuel ratio of the exhaust gas is lean, the catalyst component contacts with NOx and reduces NOx to N₂. At the same time, it is oxidized to become metal oxide MOx such as rhodium oxide. After all of the metal M is oxidized, the capability of NOx reduction disappears. Therefore, it is necessary to regenerate the metal M when it is oxidized to a certain extent.

As shown in FIG 8, the above regeneration is performed by setting the oxygen concentration of the exhaust gas to almost equal to 0% as the air/fuel ratio is in a theoretical air/fuel ratio or a rich state, by bringing the metal oxide MOx such as rhodium oxide into contact with reducer such as unburned HC, CO, and H₂ in a reduction atmosphere to reduce the metal oxide MOx and by returning the metal oxide MOx to its original metal M.

In the case of the direct reduction type NOx catalyst, the reaction for reducing the metal oxide MOx is quickly performed even at a low temperature (e.g. 200°C or higher) compared to the case of other catalyst and moreover, there is an advantage that the problem of sulfur poisoning is small.

Moreover, cerium (Ce) is blended. This cerium contributes for decreasing the oxidation of the metal M and for holding the capability of reduction of NOx. And a three-way-catalyst is set to a lower layer to accelerate the reaction of reduction and oxidation, particularly the reaction of reducing NOx in a rich state. Moreover, iron (Fe) is added to a catalyst support in order to improve the rate of NOx purge.

However, though sulfur poisoning is small compared to the case of the NOx occlusion reduction catalyst, sulfur poisoning is slowly progressed by the sulfur in a fuel and the deterioration of the catalyst is progressed. That is, because the sulfur contained in the exhaust gas is absorbed as SO₂ in the iron added to the catalyst support, primary sulfur poisoning occurs in which the improvement of the purge performance of NOx due to the iron is inhibited. Moreover, in an oxidizing atmosphere containing no reducer at a constant temperature, SO₂ discharged from iron is changed to SO₃ and the SO₃ is combined with cerium. Therefore, secondary sulfur poisoning occurs and the rate of NOx purge is decreased. In this secondary sulfur poisoning, the contribution of the cerium to holding the capability of the NOx reduction is lowered.

However, in the case of the direct reduction type NOx catalyst, the exhaust gas temperature necessary to reactivate the deteriorated catalyst due to the sulfur poisoning is approx. 400°C. This temperature is low comparing to the NOx occlusion reduction catalyst. Therefore, it is easily possible to achieve the temperature even in a normal driving state.

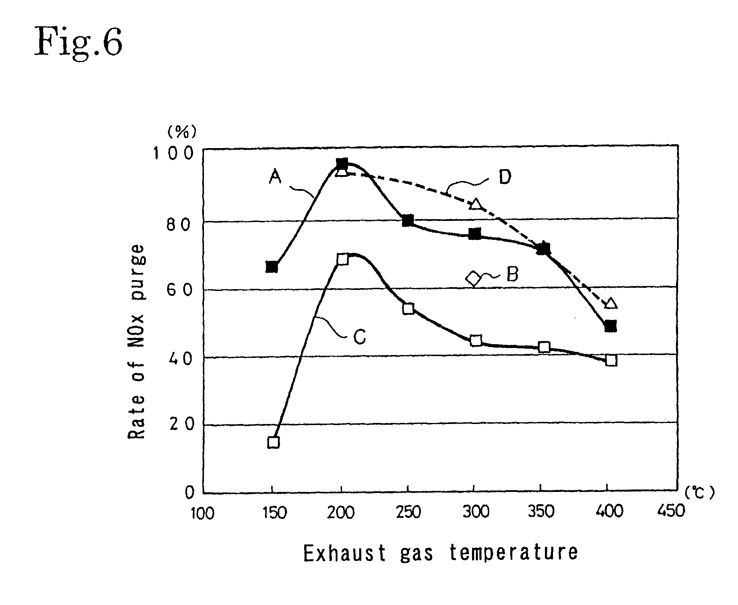

FIG. 6 shows a result of experimenting the sulfur poisoning state by a simulated gas system. FIG. 6 shows a result of performing an experiment of setting an exhaust gas temperature to a specific temperature of 150°C to 400°C, repeatedly generating a lean state gas and a rich state gas, and then measuring the rate of NOx purge.

According to FIG. 6, a high purge rate is shown in the initial state (a continuous line A with a symbol ■). However, it is found that the purge rate is deteriorated to approx. 63% when setting an exhaust gas temperature to 300°C and 22.5 hr elapses without performing reactivation of a deteriorated catalyst through sulfur purge (points B with a symbol ◇). Moreover, it is found that sulfur poisoning progresses and the purge rate is deteriorated by approx. 20% to 30% compared to the case of the initial state (a continuous line A with a symbol ■) when setting the exhaust gas temperature to 450°C and simply repeating the lean state and rich state of NOx reduction (a continuous line C with a symbol □).

When the deterioration due to the sulfur poisoning progresses in the direct reduction type NOx catalyst, the rate of NOx purge is decreased because the capability of reducing NOx to N₂ is decreased even in the case of an atmosphere in which the air/fuel ratio of the exhaust gas is in the lean state and the oxygen concentration is high and moreover, the NOx reduction capability is immediately decreased to a value close to a limit. Therefore, because it is necessary to frequently perform regeneration through rich burning, fuel efficiency decreases.

Therefore, in the case of the direct reduction type NOx catalyst, it is necessary to perform not only the regeneration of reducing the metal oxide MOx to the metal M by bringing into contact with reducer in a reducing atmosphere but also the catalyst reactivation by the sulfur purge. Monitoring the progress state of deterioration due to the sulfur poisoning, when the deterioration is progressed to a certain extent, the exhaust gas temperature is setting to approx. 400°C in a low oxygen concentration state to remove sulfur and the catalyst reactivation is forcibly performed.

However, a state in which the exhaust gas temperature becomes a sulfur purge temperature of approx. 400°C occurs at a high frequency even by the normal lean state operation. And when the oxygen concentration is comparatively high and the exhaust gas temperature reaches the sulfur purge temperature, sulfur is separated from iron and primary sulfur poisoning is eliminated. However, a problem occurs that the sulfur combines with oxygen contained in the exhaust gas to produce SO₃ and the SO₃ combines with cerium to cause new sulfur poisoning, that is, secondary sulfur poisoning which is difficult to eliminate.

However, in the case of the experiment of the simulated gas system shown in FIG. 6, before raising the exhaust gas temperature to 400°C, the rich operation is carried to perform sulfur purge and after this reactivating a deteriorated catalyst, the NOx regeneration experiment is carried to raise the exhaust gas temperature to 400°C and to repeat the lean state and rich state. Then, it is found that the rate of NOx purge at 400°C is not deteriorated and even after a durability test, the purge rate is almost returned to a state close to the initial state (a continuous line A with a symbol ■) as shown by a dotted line with a symbol Δ. From this fact, it is found that the temperature reaches 400°C after performing the sulfur purge but secondary sulfur poisoning does not occur even if the lean state is set.

### SUMMARY OF THE INVENTION

The present invention is made to solve the above problems in accordance with the above knowledge and its object is to provide a NOx purging system using a direct reduction type NOx catalyst for purging NOx contained in an exhaust gas and a method of reactivating a deteriorated catalyst, in which exploiting the characteristics that a reactivating catalyst deteriorated by sulfur poisoning is possible at an exhaust gas temperature of a normal operating range, a rich control operation is performed to raise the temperature of the direct reduction type NOx catalyst to the sulfur purge temperature (approximately 400°C) or higher under a low-oxygen condition when the exhaust gas temperature reaches to a predetermined temperature (350°C to 400°C) or higher during the normal operation of an engine so that NOx is removed efficiently through the sulfur purge preventing secondary sulfur poisoning by excluding the influence of sulfur poisoning.

A NOx purging system for achieving the above object and a method of reactivating a deteriorated catalyst therein are constituted as described below.
1) The NOx purging system constituted by arranging a direct reduction type NOx catalyst in an exhaust gas passage in which a catalyst component reduces NOx to nitrogen and is also oxidized when an oxygen concentration of the exhaust gas of an engine is high and the catalyst component is reduced when the oxygen concentration of the exhaust gas lowers, comprising; a first sulfur purge control means which performs a first sulfur purge operation for lowering the oxygen concentration of the exhaust gas and also raising an exhaust gas temperature to a sulfur purge temperature or higher when the exhaust gas temperature becomes higher than a predetermined temperature during the normal operation.
2) Moreover, the NOx purging system above comprises; a second sulfur purge control means which performs a second sulfur purge operation for lowering the oxygen concentration of the exhaust gas and also raising the exhaust gas temperature to the sulfur purge temperature or higher independently of the exhaust gas temperature, and a sulfur purge start judgment means for judging that the present time is a start time of the first sulfur purge operation when a deterioration index value indicating a progress state of catalyst deterioration due to sulfur poisoning ranges between a predetermined first reference value and a predetermined second reference value, and judging that the present time is a start time of the second sulfur purge operation when the deterioration index value exceeds the predetermined second reference value.

The method of reactivating a deteriorated catalyst of the NOx purging system is constituted as described below.
1) The method of reactivating a deteriorated catalyst for a NOx purging system constituted by arranging a direct reduction type NOx catalyst in an exhaust gas passage in which a catalyst component reduces NOx to nitrogen and is also oxidized when an oxygen concentration of the exhaust gas is high and the catalyst component is reduced when the oxygen concentration of the exhaust gas lowers, comprising steps of; carrying a first sulfur purge operation control to perform a first sulfur purge operation for lowering the oxygen concentration of the exhaust gas and also for raising the exhaust gas temperature to a sulfur purge temperature or higher when the exhaust gas temperature becomes more than a predetermined temperature during the normal operation.
2) Moreover, the method of reactivating the deteriorated catalyst for the NOx purging system above-mentioned comprises steps of; performing the first sulfur purge operation when a deterioration index value indicating a progress state of a catalyst deterioration due to sulfur poisoning ranges between a predetermined first reference value and a predetermined second reference value, and performing a second sulfur purge operation for lowering the oxygen concentration of the exhaust gas and also for raising the exhaust gas temperature to the sulfur purge temperature or higher when the deterioration index value exceeds the predetermined second reference value independently of the exhaust gas temperature.
3) Furthermore, the method of reactivating the deteriorated catalyst for the NOx purging system above comprises step of; calculating the deterioration index value indicating a progress state of catalyst deterioration due to sulfur poisoning in accordance with a fuel consumption and a sulfur concentration of fuel.
   In this case, an accumulated value of the quantity of deposited sulfur calculated in accordance with the fuel consumption and the sulfur concentration of fuel is used as the deterioration index value.
4) Then, in at least either of the first sulfur purge operation and the second sulfur purge operation, when the difference between the sum total of discharged sulfur quantity calculated by collating a discharged gas quantity and exhaust gas temperature with discharged sulfur quantity map data previously input and the accumulated sulfur quantity calculated in accordance with the fuel consumption and the sulfur concentration of fuel becomes not more than a predetermined third reference value, the sulfur purge operation is terminated.
5) Or, in at least either of the first sulfur purge operation and the second sulfur purge operation, when a sulfur purge operation time elapses which is calculated by collating an accumulated sulfur quantity calculated in accordance with the fuel consumption and the sulfur concentration of fuel with sulfur purge operation time map data previously input in accordance with an exhaust gas quantity and the exhaust gas temperature, the sulfur purge operation is terminated.

It is possible to constitute the direct reduction type NOx catalyst by making a support such as âtype zeolite support a special metal such as rhodium (Rh) or palladium (Pd) which is a catalyst component. Moreover, it is possible to form the direct reduction type NOx catalyst, blending cerium (Ce) in order to contribute to holding the NOx reduction capability by decreasing the oxidation action of a metal M of the catalyst component, and arranging a three-way-catalyst having platinum or the like on a lower layer in order to accelerate a redox reaction, particularly the reaction of reducing NOx discharged in a rich state, or adding iron (Fe) to the support in order to improve the rate of NOx purge.

A catalyst in which a catalyst component reduces NOx to N₂ and the catalyst component is oxidized when the oxygen concentration of the exhaust gas is high, and the catalyst component is reduced when the oxygen concentration of the exhaust gas is decreased, is referred to as "direct reduction type NOx catalyst" in this case in order to distinguish the catalyst used in this case from catalysts used in other prior arts.

Moreover, the normal operation denotes an operation performed at a torque or an engine speed required for an engine when an operation for regenerating a catalyst or an operation for reactivating a deteriorated catalyst is not performed. In the case of the normal operation, NOx contained in the exhaust gas is directly reduced to N₂ through the direct reduction type NOx catalyst.

Moreover, the first sulfur purge operation can be performed through a rich spike control according to an intake air quantity control such as an intake air throttling, a fuel injection control such as a post-injection, or an EGR control. Furthermore, the predetermined temperature is one of numerical values or map data obtained through experiments and the like, that is, a predetermined value indicating a temperature ranging between 350°C and 400°C.

It is also allowed to perform the control in accordance with the catalyst temperature instead of the exhaust gas temperature.

According to the NOx purging system and the method of reactivating the deteriorated catalyst therein, in the case of the NOx purging system using the direct reduction type NOx catalyst for purging NOx in the exhaust gas, since the deteriorated catalyst reactivation against sulfur poisoning can be performed at an exhaust gas temperature of the normal operation it is possible to exclude an influence of sulfur poisoning and efficiently purge NOx by performing the rich spike for decreasing the oxygen concentration of the exhaust gas and for raising exhaust gas temperature to the sulfur purge temperature (approx. 400 °C ) or higher under low-oxygen conditions when the exhaust gas temperature becomes higher than a predetermined temperature during the normal engine operation, thereby performing the deteriorated catalyst reactivation according to the sulfur purge while preventing a secondary sulfur poisoning.

Moreover, in the first sulfur purge operation, because the rich spike is performed only when the exhaust gas temperature rises, the fuel consumption for raising the exhaust gas temperature is decreased and the fuel efficiency can be prevented from decreasing.

That is, the first sulfur purge operation for performing the sulfur purge when the exhaust gas temperature rises higher during the normal operation makes it possible to perform the deteriorated catalyst reactivation according to the sulfur purge while preventing secondary sulfur poisoning, by setting the exhaust gas temperature not less than the sulfur purge temperature under low-oxygen conditions while saving fuel consumption for raising the exhaust gas temperature.

Then, by the first sulfur purge operation, after sulfur is deposited on the catalyst to a certain extent, it is possible to perform a sulfur purge before the exhaust gas temperature becomes not less than the sulfur purge temperature. Therefore, it is possible to avoid that the exhaust gas temperature becomes not less than the sulfur purge temperature while keeping the lean state of the normal operation. Then, it is possible to prevent secondary sulfur poisoning and moreover perform the deteriorated catalyst reactivation at high frequency.

And, when the catalyst deterioration progresses though the exhaust gas temperature does not become higher than a predetermined temperature during the normal operation, it is possible to steadily perform the deteriorated catalyst reactivation in accordance with the second sulfur purge operation before the influence of catalyst deterioration is intensified.

Furthermore, by properly using the first sulfur purge operation and the second sulfur purge operation, in the case the progress of the catalyst deterioration is insignificant, it is possible to restrain the decreasing of fuel efficiency caused by raising the exhaust gas temperature and moreover to perform the deteriorated catalyst reactivation at high frequency, by performing the deteriorated catalyst reactivation in accordance with the first sulfur purge operation which is performed only when the exhaust gas temperature becomes higher than a predetermined temperature during the normal operation.

And it is possible to avoid unnecessary sulfur purge operations making no contribution to the deteriorated catalyst reactivation and to restrain the decreasing of fuel efficiency by the method of calculation of the deterioration index value and the method of judgment of sulfur purge operation end in the method of reactivating a deteriorated catalyst.

Therefore, it is possible to restrain the deterioration of the direct reduction type NOx catalyst due to sulfur poisoning, particularly due to secondary sulfur poisoning of cerium or the like. Moreover, since the sulfur purge can be performed at high frequency, it is not necessary to perform the rich spike operation for a long time, and the torque fluctuation often triggered by this operation is eliminated. Therefore, it is possible to eliminate the mal-drivability following the deteriorated catalyst reactivation.

### BRIEF DESCRIPTION OF THE DRAWINGS

FIG. 1 is an illustration showing a configuration of a NOx purging system of an embodiment of the present invention;
FIG. 2 is an illustration showing a configuration of a NOx purging system control means of an embodiment of the present invention;
FIG. 3 is a flowchart showing an example of a NOx purging system control flow of an embodiment of the present invention;
FIG. 4 is a flowchart showing an example of the catalyst regenerating control flow in FIG. 3;
FIG. 5 is a flowchart showing an example of the deteriorated catalyst reactivation control flow in FIG. 3;
FIG. 6 is an illustration showing a relation between an exhaust gas temperature and a purge rate of a direct reduction type NOx catalyst obtained through an experiment in a simulated gas system;
FIG. 7 is a schematic view showing a reaction of a direct reduction type NOx catalyst at a high oxygen concentration; and
FIG. 8 is a schematic view showing a reaction of a direct reduction type NOx catalyst at a low oxygen concentration state.

### DETAILED DESCRIPTION OF THE PREFERRED EMBODIMENT

The embodiments of a NOx purging system and a method of reactivating a deteriorated catalyst therein according to the present invention are described below by referring to the accompanying drawings.

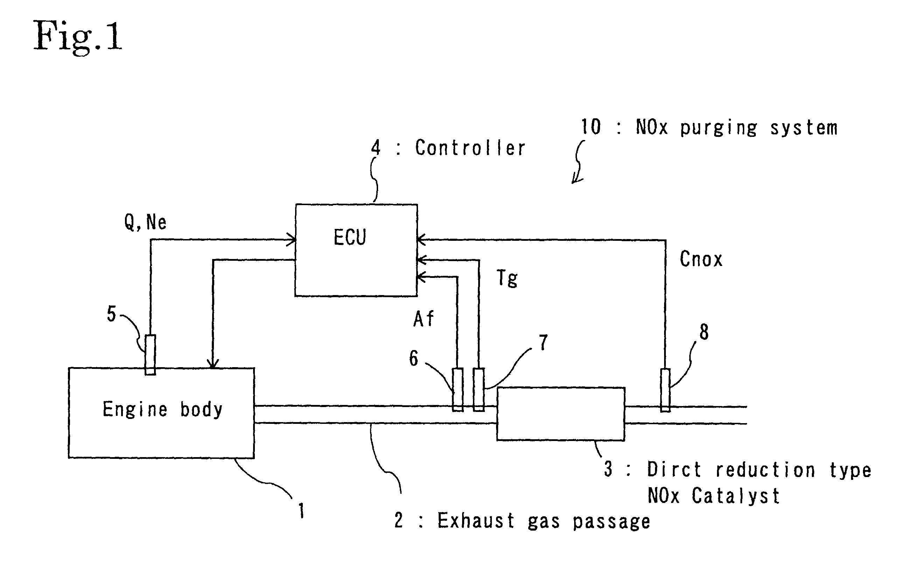

First, the NOx purging system is described. As shown in FIG. 1, the NOx purging system 10 is provided with a direct reduction type NOx catalyst 3 arranged in an exhaust gas passage (a passage for exhaust gas) 2 of an engine body 1.

As shown in FIGs. 7 and 8, the direct reduction type NOx catalyst 3 is constituted by making a support T such as âtype zeolite support a special metal M such as rhodium (Rh) or palladium (Pd). Moreover, cerium (Ce) is blended for reducing an oxidization of the metal M and contributing to holding of a NOx reduction capability, a three-way-catalyst having platinum or the like is arranged to a lower layer so as to accelerate a redox reaction, and iron (Fe) is added to a support in order to improve a rate of NOx purge.

Then, the direct reduction type NOx catalyst 3 has the characteristic that it reduces NOx to N₂ contacting with NOx in an atmosphere of a high oxygen concentration like an exhaust gas of an internal combustion engine such as a diesel engine in which the air/fuel ratio is lean and the metal M itself is oxidized to become metal oxide MOx such as rhodium oxide (RhOx) as shown in FIG. 7, and that the metal oxide MOx is reduced to become its original metal M such as rhodium by contacting with reducers such as unburned HC, CO, and H₂ in the case of a reduction atmosphere in which an oxygen concentration of the exhaust gas is low almost equal to 0% as the air/fuel ratio is equal to a theoretical air/fuel ratio or in a rich state as shown in FIG. 8,

Moreover, an operating state detector 5 is set which is constituted by a torque sensor and an engine speed sensor for detecting an operating state of an engine, mainly a torque Q and an engine speed Ne. Furthermore, in the exhaust gas passage 2, an air/fuel ratio sensor 6 for detecting an air/fuel ratio Af is set upstream of the direct reduction type NOx catalyst 3, an exhaust gas temperature sensor 7 for detecting an exhaust gas temperature Tg is set upstream of the direct reduction type NOx catalyst 3, and moreover a NOx sensor 8 for detecting a NOx concentration Cnox is set downstream of the NOx catalyst 3.

Then, a controller 4 referred to as an engine control unit (ECU) for performing the general control of an engine such as fuel injection control by using the torque (load) Q and engine speed Ne of the engine 1 obtained from the operating state detector 5 or the like as inputs is constituted and a NOx purging system control means for performing the catalyst regeneration control and deteriorated catalyst reactivation control of the direct reduction type NOx catalyst 3 is set to the controller 4.

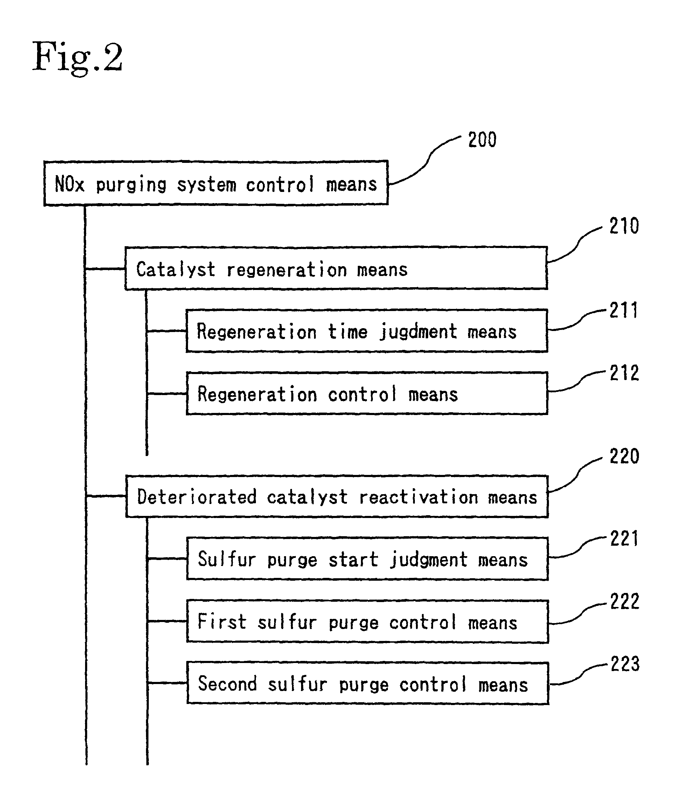

As shown in FIG. 2, a NOx purging system control means 200 is provided with a catalyst regeneration means 210 including a regeneration time judgment means 211 and a regeneration control means 212 and a deteriorated catalyst reactivation means 220.

The catalyst regeneration means 210 is a means for regenerating the direct reduction type NOx catalyst 3 in the state of low oxygen concentration where the air/fuel ratio of the exhaust gas is in a rich state. The catalyst 3 has become the metal oxide MOx by contacting with NOx to reduce NOx to N₂ in the normal operating state of high oxygen concentration where the air/fuel ratio of the exhaust gas is in a lean state. The means 210 generates the exhaust gas of theoretical air/fuel ratio or a rich state where oxygen concentration is almost equal to 0% by the regenerating control means 212, judging the time for performing the regeneration by the regeneration time judgment means 211, and makes the metal oxide MOx contact with reducers such as unburned HC, CO, and H₂ to reduce the metal oxide MOx and return it to the metal M.

The regeneration time judgment means 211 judges whether it is the regeneration time or not, by the NOx concentration Cnox of the exhaust gas downstream of the direct reduction type NOx catalyst 3 when reducing NOx, by the elapsed time when the oxygen concentration is high, or by the estimated value of the NOx quantity reduced by the direct reduction type NOx catalyst 3 when reducing NOx.

Moreover, the regeneration control means 212 is a means for decreasing the oxygen concentration of the exhaust gas, that is, a means for performing the rich spike operation with the air/fuel ratio Af of 14.7 or less, which performs any one or a combination of the controls such as a fuel injection control for controlling the injection of the fuel to be supplied to the combustion chambers of an internal combustion engine, an intake air quantity control for controlling the quantity of the intake air, and an EGR control for controlling the quantity of EGR gas in an EGR system, and performs a feedback control so that the detection value Af is kept within a predetermined range in accordance with the detection value Af of the air/fuel ratio sensor 6.

The fuel injection control includes a main injection time control for changing time of the main fuel injection into the combustion chambers of an engine and a post-injection control for performing a post-injection after a main injection and the intake air control includes an intake throttle valve control for controlling a valve opening of a not-illustrated intake throttle valve and a turbocharger intake control for controlling the quantity of an intake air from a compressor of a not-illustrated turbocharger.

Moreover, the deteriorated catalyst reactivation means 220 is provided with a sulfur purge start judgment means 221, a first sulfur purge control means 222, and a second sulfur purge control means 223.

The sulfur purge start judgment means 221 judges whether to perform either of the first sulfur purge operation and the second sulfur purge operation. It estimates a sulfur quantity X₁ deposited on the direct reduction type NOx catalyst 3 according to the fuel consumption and the sulfur concentration of the fuel. It judges to start the first sulfur purge operation when an accumulated value Xt obtained by accumulating the deposited sulfur quantity X₁ is larger than a first purge start judgment value X1 and smaller than a second purge start judgment value X2, and judges to start the second sulfur purge operation when the accumulated value Xt is larger than the second purge start judgment value X2 and not to start any of sulfur purge operation in a case other than the above cases.

Moreover, the first sulfur purge control means 222 does not have to immediately perform the sulfur purge operation by assuming that the accumulated sulfur quantity Xt does not reach a limit X2 though Xt increases to a certain extent. However, the means 222 performs the rich spike operation for decreasing the oxygen concentration of the exhaust gas and raising an exhaust gas temperature Tg to a sulfur purge temperature Tr (approx. 400°C) or higher when the exhaust gas temperature Tg becomes higher than a predetermined temperature Tc (350°C to 400°C) during the normal operation by assuming that the sulfur purge operation must be performed according to a necessity. And it purges and reactivates a deteriorated catalyst preventing secondary sulfur poisoning under low-oxygen conditions. Because the first sulfur purge operation is performed when the exhaust gas temperature Tg is kept high, only a small quantity of fuel is consumed to raise the exhaust gas temperature.

Furthermore, the first sulfur purge control means 222 performs sulfur purge before the exhaust gas temperature Tg becomes not less than the sulfur purge temperature Tr after sulfur is deposited to a certain extent on the catalyst 3. Therefore, it is possible to avoid that the exhaust gas temperature Tg becomes not less than the sulfur purge temperature Tr under the lean state of the normal operation and to prevent a secondary sulfur poisoning.

And, the second sulfur purge means 223 performs the rich spike operation for decreasing the oxygen concentration of the exhaust gas and forcibly raising the exhaust gas temperature Tg to the sulfur purge temperature Tr or higher by assuming that a sulfur purge is immediately necessary because the accumulated sulfur quantity Xt reaches the limit X2, independently of the exhaust gas temperature Tg even when the exhaust gas temperature Tg is lower than a predetermined temperature Tc. And it purges sulfur and reactivates a deteriorated catalyst preventing the secondary sulfur poisoning under a rich state.

It is possible to perform the rich spike operation in the first and second purge operations in accordance with any one of the fuel injection control, an intake air control, and an EGR control or a combination of them similar to the case in the rich spike operation for the regenerating process.

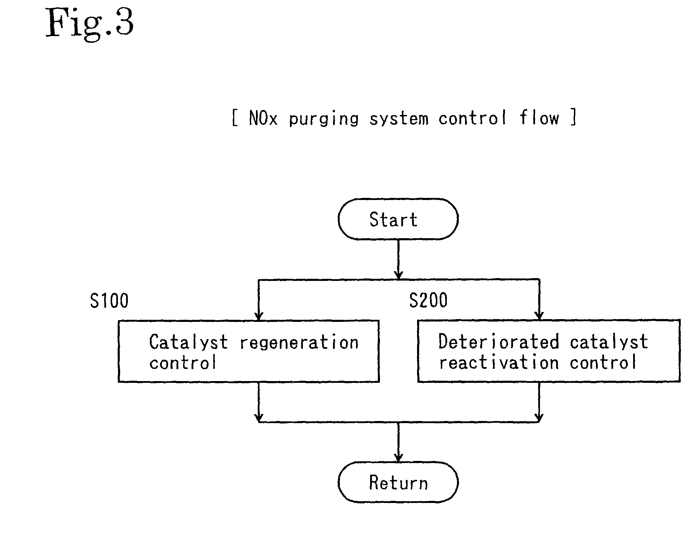

Then, a NOx purging system control flow is described below in which NOx is purged from the exhaust gas by controlling the NOx purging system 10 of above configuration by the NOx purging system control means 200. The control flow is performed in accordance with the flowcharts and the like illustrated in FIGs. 3 to 5.

The NOx purging system control flow shown in FIG. 3 comprises the catalyst regeneration control in step S100 and the deteriorated catalyst reactivation control in step S200. It is composed as a part of a general flow for controlling the whole of an engine, and is called from a main system control flow. It is carried in parallel with an engine control flow and thereafter the flow returns to the main engine control flow, and completed when the engine control flow is completed.

Moreover, as shown in FIG. 3, when the NOx purging system control flow starts, the catalyst regeneration control and deteriorated catalyst reactivation control are executed in parallel.

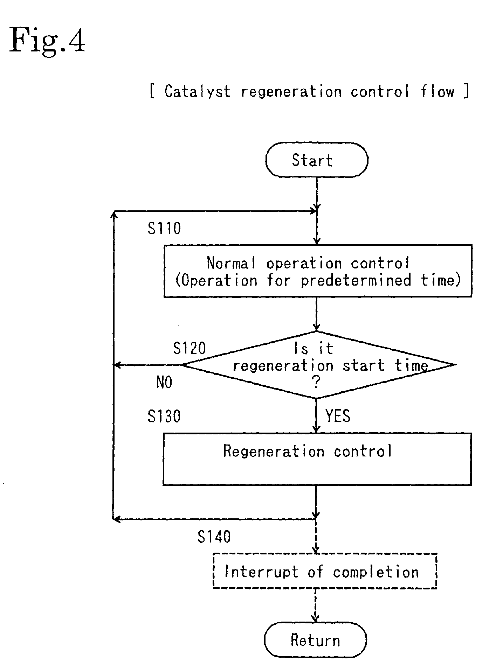

As shown by the catalyst regeneration control flow in FIG. 4, the catalyst regeneration control performs the normal operation control for purging NOx by the direct reduction type catalyst 3 for a given time (for example, the time corresponding to a time period for judging whether to perform the catalyst regeneration control) in step S110 and then, judges in step S120 whether the direct reduction type catalyst 3 is in a regenerating start time, and when it is judged to be in the regeneration start time, after the regenerating control is performed in step S130, but when it is not judged to be in the regenerating start time, the flow directly returns to step S110 to repeat the above control.

Moreover, when the control flow is completed in such a case as a completion of the engine operation, an interruption of the completion in step S140 occurs and the flow returns to the NOx pursing system control flow in FIG. 3 to complete the flow.

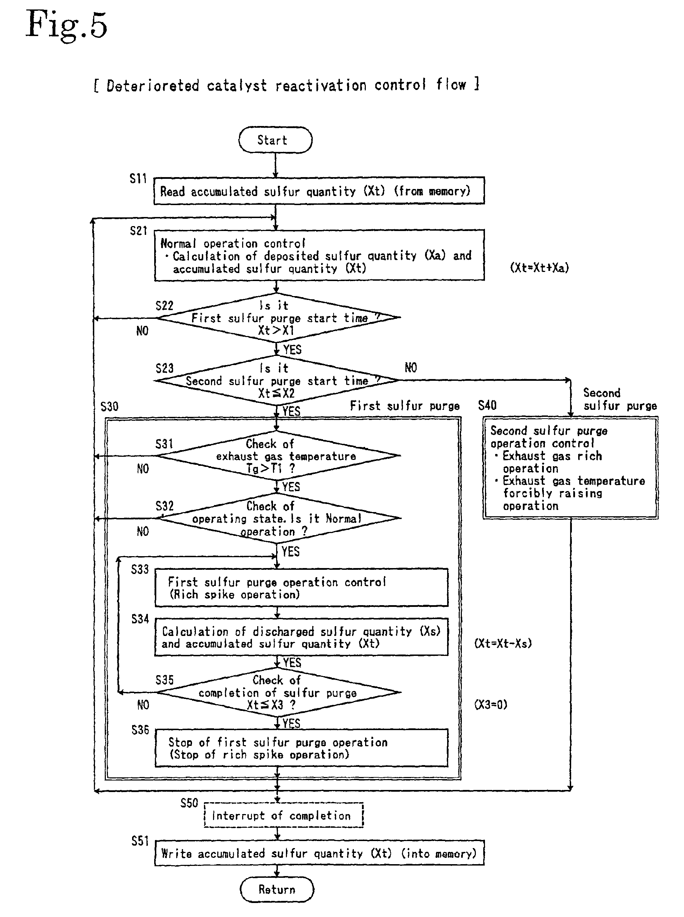

Then, in the case of the deteriorated catalyst reactivation control, as shown by the deteriorated catalyst reactivation control flow in FIG. 5, when the flow starts, the accumulated quantity Xt of the sulfur accumulated on the direct reduction type NOx catalyst 3 by the last-time engine operation is read from a memory in step S11.

Then, in step S21, the normal operation control is performed for a predetermined time (for example, time corresponding to a time period for judging whether to perform deteriorated catalyst reactivation control), and a deposited sulfur quantity Xa by the engine operation for the predetermined time is calculated in accordance with fuel consumption and a sulfur concentration of fuel, and the deposited sulfur quantity Xa is added to the accumulated quantity Xt to make Xt a new accumulated quantity Xt (Xt=Xt+Xa).

In next step S22, the first sulfur purge start time is judged whether it is the first sulfur purge start time by whether the accumulated quantity Xt is larger than a given first purge start judgment value X1. When Xt is not larger than X1, the flow returns to step S21, assuming that it is not in the first sulfur purge start time.

Moreover, when it is judged in step 22 that the accumulated quantity Xt is larger than the given first purge start judgment value X1, it is assumed it is in the first sulfur purge start time. However further in next step S23, the second sulfur purge start time is judged by whether the accumulated quantity Xt is larger than the given second purge start judgment value X2. When Xt is smaller than X2, the flow goes to S30 to perform the first sulfur purge operation by assuming it is not in the second sulfur purge start time. When Xt is larger than X2, the flow goes to S40 to perform the second sulfur purge operation by assuming it is in the second sulfur purge start time.

In the case of the first sulfur purge operation in step S30, it is judged whether the exhaust gas temperature Tg is higher than the predetermined temperature Tc in step S31. When the exhaust gas temperature Tg is higher than the predetermined temperature Tc, it is further judged in step S32 whether the present operation is the normal operation in which other operations such as the regeneration control is not performed.

When the exhaust gas temperature Tg is higher than the predetermined temperature T1 and the normal operation is performed as a result of judgments in both steps S31 and S32, the flow goes to the first sulfur purge operation control in step S33. In other cases, that is, when the exhaust gas temperature Tg is lower than T1 or the regenerating operation is currently performed, it is not assumed to be in a state for the first sulfur purge operation and the flow returns to S21.

In the case of the first sulfur purge operation control in step S33, the first sulfur purge operation is performed for a predetermined time and in step S34, a discharged sulfur quantity Xs during the first sulfur purge is calculated by collating the exhaust gas quantity and the exhaust gas temperature Tg with discharged sulfur quantity map data previously input and subtracting the discharged quantity Xs from the accumulated quantity Xt to obtain the accumulated quantity Xt after performing the first sulfur purge operation control in step S33. However, when the accumulated quantity Xt is not equal to or less than a predetermined third judgment value X3 (X3 is normally zero) as a result of the judgment in step S35, the flow returns to step S33 to continue the first sulfur purge operation control until the accumulated quantity Xt becomes not more than the predetermined third judgment value X3. When the accumulated quantity Xt becomes not more than the predetermined third judgment value X3 as a result of the judgment in step S35, it is judged that sulfur purge is completed to stop the first sulfur purge operation in step S36 and returns to the normal operation.

In the case of the flow in FIG. 5, the time when the accumulated quantity Xt becomes not more than the predetermined third judgment value X3 is assumed as the time when the first sulfur purge operation is completed. However, it is also allowed to calculate a sulfur purge operation time by collating the accumulated sulfur quantity Xt calculated in accordance with fuel consumption and a sulfur concentration of fuel with a sulfur purge operation time map data previously input in accordance with the exhaust gas quantity and the exhaust gas temperature Tg at the start of the first sulfur purge operation and perform the first sulfur purge operation during the calculated operation time.

The first sulfur purge operation control in step S33 sets the exhaust gas temperature Tg to a sulfur purge temperature or higher by performing the rich spike operation when the exhaust gas temperature Tg is higher than the predetermined temperature Tc (for example, 350°C to 400°C) and the exhaust gas temperature Tg may become not less than a sulfur purge temperature (approx. 400°C) and reactivates the deteriorated direct reduction type catalyst 3 by the rich operation preventing the secondary sulfur poisoning of cerium by making the oxygen concentration close to zero to prohibit SO₃ to be produced.

Moreover, the second sulfur purge operation in step S40 is the operation control for forcibly performing the sulfur purge before a proper state for sulfur purge is realized when, for example, the deterioration of the NOx purging performance becomes problematic by a further progress of sulfur poisoning or an increase of fuel cost becomes problematic because of a frequent regenerating operation for regenerating a catalyst.

The second sulfur purge operation performs the rich spike operation independently of the operating state to raise the temperature of the exhaust gas so that sulfur is forcibly separated, and the exhaust gas temperature Tg is raised to a sulfur purge temperature or higher by the raised exhaust gas temperature to separate sulfur, and perform the deteriorated catalyst reactivation.

When the above step S30 or S40 is completed, the flow returns to step S21 to repeat the operation. Then, when a case of completing the control flow such as a completion of an engine operation occurs, an interruption for the completion of step S50 occurs, the accumulated sulfur quantity Xt at the time of completion in step 51, that is, the accumulated quantity Xt calculated in step S21 or S32 is rewritten in a memory in step S51 and the current flow returns to the NOx purging system control in FIG. 3 to complete the flow.

Then, when the catalyst regeneration control in FIG. 4 and the deteriorated catalyst reactivation control in FIG. 5 both return to the NOx purging system control flow in FIG. 3 due to the interruption of completion and further return to a not-illustrated main engine control flow, and the NOx purging system control flow is also completed at the same time when the engine control flow is completed.

According to the exhaust gas purging system 10 of the above configuration and the method of reactivating a deteriorated catalyst therein, it is possible to perform the deteriorated catalyst reactivation against sulfur poisoning preventing secondary sulfur poisoning by using the characteristics that the exhaust gas temperature Tg at the time of reactivating the deteriorated direct reduction type NOx catalyst 3 is comparatively low at approx. 400°C, thereby performing the rich spike operation when the exhaust gas temperature Tg reaches a temperature probably exceeding the sulfur purge temperature Tr, that is, the predetermined temperature T1 (e.g. 350°C to 400°C) and raising the exhaust gas temperature Tg to the sulfur purge temperature Tr or higher under low-oxygen conditions.

Moreover, it is also allowed to perform the above control at the temperature of the direct reduction type NOx catalyst 3 instead of performing the control at the exhaust gas temperature Tg. In this case, the predetermined temperature slightly changes.

### INDUSTRIAL APPLICABILITY

The present invention provides a NOx purging system using a direct reduction type NOx catalyst to purge NOx contained in an exhaust gas and a method of reactivating a deteriorated catalyst therein, in which exploiting the characteristics that the reactivation of deteriorated catalyst against sulfur poisoning can be performed at an exhaust gas temperature within the normal operation range, a rich control operation is performed to set the temperature of the direct reduction NOx catalyst to a sulfur purge temperature (approx. 400°C) or higher under low-oxygen conditions when the exhaust gas temperature becomes not less than a predetermined temperature (350°C to 400°C) during the normal operation of an internal combustion engine so that NOx is removed efficiently excluding the influence of sulfur poisoning by the sulfur purge preventing secondary sulfur poisoning.

Therefore, the present invention can be used for a NOx purging system provided with a direct reduction type NOx catalyst in order to purge NOx in the exhaust gas. Thus, the present invention makes it possible to prevent air pollution by efficiently purifying the exhaust gas discharged from an internal combustion engine of a vehicle and a stationary internal combustion engine.

## Claims

1. A NOx purging system constituted by arranging a direct reduction type NOx catalyst in an exhaust gas passage in which a catalyst component reduces NOx to nitrogen and is also oxidized when an oxygen concentration of the exhaust gas of an engine is high and the catalyst component is reduced when the oxygen concentration of the exhaust gas lowers, comprising;
a first sulfur purge control means which performs a first sulfur purge operation for lowering the oxygen concentration of the exhaust gas and also raising an exhaust gas temperature to a sulfur purge temperature or higher when the exhaust gas temperature becomes higher than a predetermined temperature during the normal operation.

2. The NOx purging system according to claim 1, comprising;
a second sulfur purge control means which performs a second sulfur purge operation for lowering the oxygen concentration of exhaust gas and also raising the exhaust gas temperature to the sulfur purge temperature or higher independently of the exhaust gas temperature, and
a sulfur purge start judgment means for judging that the present time is a start time of the first sulfur purge operation when a deterioration index value indicating a progress state of catalyst deterioration due to sulfur poisoning ranges between a predetermined first reference value and a predetermined second reference value, and judging that the present time is a start time of the second sulfur purge operation when the deterioration index value exceeds the predetermined second reference value.

3. A method of reactivating a deteriorated catalyst for a NOx purging system constituted by arranging a direct reduction type NOx catalyst in an exhaust gas passage in which a catalyst component reduces NOx to nitrogen and is also oxidized when an oxygen concentration of the exhaust gas is high and the catalyst component is reduced when the oxygen concentration of the exhaust gas lowers, comprising steps of;
carrying a first sulfur purge operation control to perform a first sulfur purge operation for lowering the oxygen concentration of the exhaust gas and also for raising the exhaust gas temperature to a sulfur purge temperature or higher when the exhaust gas temperature becomes more than a predetermined temperature during the normal operation.

4. The method of reactivating the deteriorated catalyst for the NOx purging system according to claim 3, comprising steps of;
performing the first sulfur purge operation when a deterioration index value indicating a progress state of a catalyst deterioration due to sulfur poisoning ranges between a predetermined first reference value and a predetermined second reference value, and
performing a second sulfur purge operation for lowering the oxygen concentration of the exhaust gas and also for raising the exhaust gas temperature to the sulfur purge temperature or higher when the deterioration index value exceeds the predetermined second reference value independently of the exhaust gas temperature.

5. The method of reactivating the deteriorated catalyst for the NOx purging system according to claim 4, comprising step of;
calculating the deterioration index value indicating a progress state of catalyst deterioration due to sulfur poisoning in accordance with a fuel consumption and a sulfur concentration of fuel.

6. The method of reactivating the deteriorated catalyst for the NOx purging system according to claim 5, wherein;
in at least either of the first sulfur purge operation and the second sulfur purge operation, when the difference between the sum total of discharged sulfur quantity calculated by collating a discharged gas quantity and exhaust gas temperature with discharged sulfur quantity map data previously input and the accumulated sulfur quantity calculated in accordance with the fuel consumption and the sulfur concentration of fuel becomes not more than a predetermined third reference value, the sulfur purge operation is terminated.

7. The method of reactivating a deteriorated catalyst for a NOx purging system according to claim 5, wherein;
in at least either of the first sulfur purge operation and the second sulfur purge operation, when a sulfur purge operation time elapses which is calculated by collating an accumulated sulfur quantity calculated in accordance with the fuel consumption and the sulfur concentration of fuel with sulfur purge operation time map data previously input in accordance with an exhaust gas quantity and the exhaust gas temperature, the sulfur purge operation is terminated.
